# EUROPEAN PATENT APPLICATION

(11) **EP 4 675 388 A1**
(43) Date of publication of application: **07.01.2026**
(21) Application number: 24762999.1
(22) Date of filing: 19.02.2024
(51) Int. Cl.: G05D 1/43

(54) **PATH PLANNING METHOD, RELATED DEVICE FOR PATH PLANNING METHOD, AND ROBOT**

(30) Priority: 27.02.2023 CN 202310212528
(71) Applicant: Beijing Roborock Innovation Technology Co., Ltd., Beijing 102206 (CN)
(72) Inventor: GUAN, Xin, Beijing 102206 (CN); ZHANG, Lei, Beijing 102206 (CN)
(74) Representative: Maiwald GmbH
(86) International application number: PCT/CN2024/077494
(87) International publication number: WO 2024/179316

(57) **Abstract**

A path planning method, a related device for path planning method, and a robot. The path planning method comprises: acquiring first distance information between two adjacent obstacles (S101); determining obstacle cluster type information on the basis of the first distance information (S102); and determining a travel path on the basis of the obstacle cluster type information (S103). According to the path planning method, obstacle cluster types in a working region of a robot can be divided on the basis of distances between obstacles, and an obstacle-dense region in the working region of the robot can be divided. On the basis of the foregoing, when determining a travel path, the obstacle-dense region can be avoided as much as possible according to obstacle cluster type information, thus the travel efficiency of the robot is improved, and further the operation efficiency of the robot is improved, thereby improving user experience.

## Description

### CROSS-REFERENCE TO RELATED APPLICATION

The present disclosure claims priority to Chinese Patent Application No. 202310212528.4, filed with China National Intellectual Property Administration on February 27, 2023, and entitled "METHOD FOR PLANNING PATH, DEVICE RELATED TO METHOD FOR PLANNING PATH, AND ROBOT", the content of which is incorporated herein by reference in its entirety.

### TECHNICAL FIELD

Embodiments of the present disclosure relate to the technical field of path planning, and in particular, to a method for planning a path, a computer-readable storage medium, a control apparatus, and a robot.

### BACKGROUND

With the development of science and technology, more and more intelligent robots have entered people's daily lives. The inventors have found that the robot needs to plan a path during the travel process. However, there may exist a relatively large number of obstacles in the user's home, resulting in a slow travel speed of the robot and reducing the user experience. Taking a cleaning robot as an example, cleaning robots have been widely used in daily life, which can free people from household cleaning work, effectively reduce people's workload in household cleaning, and alleviate people's fatigue during the household cleaning process. However, in the case where there are a relatively large number of obstacles in the operating zone of the cleaning robot, the travel speed of the obstacles will be affected, thereby affecting the cleaning speed and user experience.

### SUMMARY

The present disclosure aims to solve at least one of the technical problems existing in the prior art or the related art.

Therefore, a first aspect of the present disclosure provides a method for planning a path.

A second aspect of the present disclosure provides a computer-readable storage medium.

A third aspect of the present disclosure provides a control apparatus.

A fourth aspect of the present disclosure provides a robot.

In view of this, a method for planning a path is provided according to the first aspect of the embodiments of the present disclosure. The method includes:
acquiring first distance information between two adjacent obstacles;
determining obstacle clustering type information based on the first distance information; and
determining a travel path based on the obstacle clustering type information.

In a feasible embodiment, the step of determining the obstacle clustering type information based on the first distance information includes:
determining, in the case where a distance between two adjacent obstacles is less than a first threshold, obstacle clustering type information of a zone where the obstacles are located as an obstacle-dense zone.

In a feasible embodiment, the method for planning a path further includes:
clustering obstacles with an interval less than the first threshold to acquire obstacle clusters;
acquiring second distance information between two adjacent obstacle clusters; and
determining the obstacle clustering type information based on the second distance information.

In a feasible embodiment, the step of determining the obstacle clustering type information based on the second distance information includes:
determining, in the case where a distance between two adjacent obstacle clusters is less than a second threshold, obstacle clustering type information of a zone where the obstacle clusters are located as an obstacle-dense zone;
where a value of the second threshold is greater than the first threshold.

In a feasible embodiment, the step of determining the travel path based on the obstacle clustering type information includes:
determining, in response to a movement instruction, a first travel path based on the obstacle clustering type information;
where the first travel path and the obstacle-dense zone are disposed in a staggered manner.

In a feasible embodiment, the step of determining the travel path based on the obstacle clustering type information includes:
determining, in response to a quick mapping instruction, a second travel path based on the obstacle clustering type information;
where the second travel path firstly passes through a zone other than the obstacle-dense zone, and then passes through the obstacle-dense zone; and/or
determining, in response to a quick cleaning instruction, a third travel path based on the obstacle clustering type information;
where the third travel path is located in a zone other than the obstacle-dense zone.

In a feasible embodiment, the method for planning a path further includes:
improving, in the case where a robot enters the obstacle-dense zone, control precision of the robot; and/or
improving, in the case where the robot enters the obstacle-dense zone, identification precision of the robot;
where the control precision includes travel control precision and/or cleaning control precision of the robot, and the identification precision includes obstacle identification precision.

In a feasible embodiment, the method for planning a path further includes:
being in response to a cleaning instruction;
dividing a zone where a robot is located into the obstacle-dense zone and an easy-to-clean zone in a case where an area of the obstacle-dense zone is greater than a third threshold; and
controlling the robot to separately clean the obstacle-dense zone and the easy-to-clean zone.

A computer-readable storage medium is provided according to the second aspect of the embodiments of the present disclosure.

The computer-readable storage medium stores a computer program to implement the method for planning a path according to any one of the above technical solutions.

A control apparatus is provided according to the third aspect of the embodiments of the present disclosure. The control apparatus includes:
a memory, storing a computer program; and
a processor, executing the computer program;
where the processor, when executing the computer program, implements the method for planning a path according to any one of the above technical solutions.

A robot is provided according to the fourth aspect of the embodiments of the present disclosure. The robot includes:
an obstacle detection apparatus, configured to acquire obstacle position information;
a processor, where the processor is connected to the obstacle detection apparatus to implement the method for planning a path according to any one of the above technical solutions; and
a navigation unit, where the navigation unit is connected to the processor.

Compared with the prior art, the present disclosure includes at least the following beneficial effects. The method for planning a path according to the embodiments of the present disclosure firstly acquires the first distance information between two adjacent obstacles, then classifies the obstacle clustering types based on the first distance information, and further determines the travel path based on the obstacle clustering type information to implement the planning of the travel path. The method for planning a path according to the embodiments of the present disclosure can classify obstacle clustering types in an operating zone of the robot based on the distance between obstacles. For example, the method can demarcate an obstacle-dense zone in the operating zone of the robot. Based on this, when the travel path is determined, the obstacle-dense zone can be avoided as much as possible based on obstacle clustering type information, which improves the travel efficiency of the robot, thereby improving the operating efficiency of the robot and the user experience.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 is a schematic step flowchart of a method for planning a path according to an embodiment of the present disclosure;
FIG. 2 is a schematic diagram of an implementation state of a method for planning a path according to an embodiment of the present disclosure;
FIG. 3 is a schematic diagram of another implementation state of a method for planning a path according to an embodiment of the present disclosure;
FIG. 4 is a structural block diagram of a computer-readable storage medium according to an embodiment of the present disclosure; and
FIG. 5 is a structural block diagram of a control apparatus according to an embodiment of the present disclosure.

### DETAILED DESCRIPTION

In order to better understand the above technical solutions, the technical solutions in the embodiments of the present disclosure will be described in detail below with reference to the accompanying drawings and specific embodiments. It should be understood that the embodiments of the present disclosure and specific features in the embodiments are detailed descriptions of the technical solutions in the embodiments of the present disclosure, but are not intended to limit the technical solutions in the present disclosure. The embodiments of the present disclosure and the technical features in the embodiments may be combined with each other with no conflict.

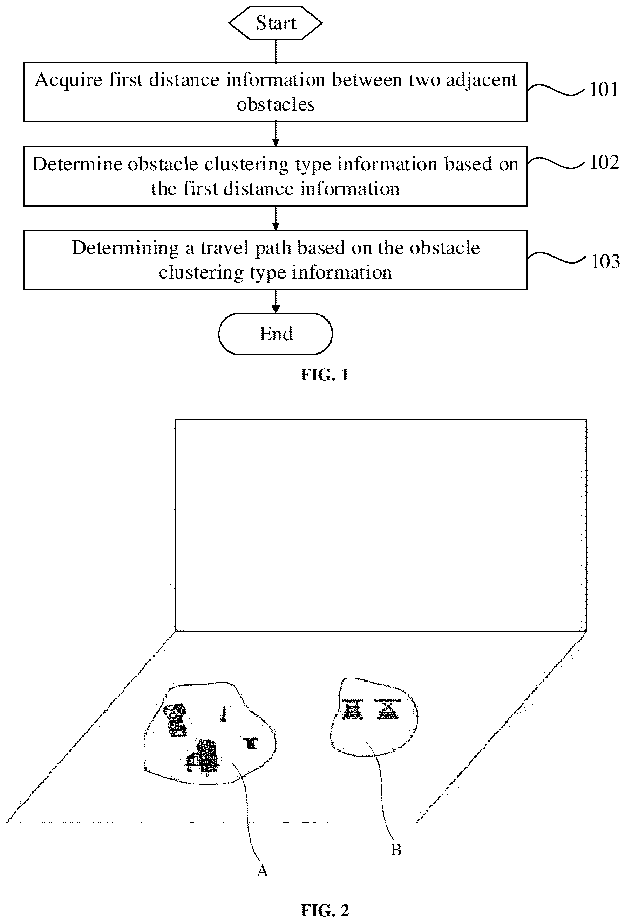

As shown in FIG. 1, a method for planning a path is provided according to a first aspect of the embodiments of the present disclosure. The method includes:
step 101, acquiring first distance information between two adjacent obstacles;
step 102, determining obstacle clustering type information based on the first distance information; and
step 103, determining a travel path based on the obstacle clustering type information.

The method for planning a path according to the embodiments of the present disclosure firstly acquires the first distance information between two adjacent obstacles, then classifies the obstacle clustering types based on the first distance information, and further determines the travel path based on the obstacle clustering type information to implement the planning of the travel path. The method for planning a path according to the embodiments of the present disclosure can classify obstacle clustering types in an operating zone of the robot based on the distance between obstacles. For example, the method can demarcate an obstacle-dense zone in the operating zone of the robot. Based on this, when the travel path is determined, the obstacle-dense zone can be avoided as much as possible based on obstacle clustering type information, which improves the travel efficiency of the robot, thereby improving the operating efficiency of the robot and the user experience.

It can be understood that, before the step of acquiring the first distance information between the two adjacent obstacles, the method for planning a path may further include: acquiring obstacle position information in the operating zone of the robot. The step of further acquiring the obstacle position information in the operating zone of the robot may include: marking information such as the position and the type of the obstacle in a map according to sensor data detected by a laser distance sensor (LDS), a physical bumper, a cliff sensor, a wall sensor, a visual detection sensor, or the like.

In a feasible embodiment, the step of determining the obstacle clustering type information based on the first distance information includes: determining, in the case where a distance between two adjacent obstacles is less than a first threshold, obstacle clustering type information of a zone where the obstacles are located as an obstacle-dense zone.

In the technical solution, the specific step of determining the obstacle clustering type information is further provided. In the case where the distance between the two adjacent obstacles is less than the first threshold, it can be considered that the distance between the two obstacles is very small, and it is difficult for the robot to pass between the two obstacles. Therefore, the obstacle clustering type information of the zone where the two obstacles are located can be determined as the obstacle-dense zone.

It can be understood that, the specific value of the first threshold may be positively correlated to the size of the robot. That is, the larger the size of the robot is, the larger the value of the first threshold is.

In a feasible embodiment, the method for planning a path further includes: clustering obstacles with an interval less than the first threshold to acquire obstacle clusters; acquiring second distance information between two adjacent obstacle clusters; and determining the obstacle clustering type information based on the second distance information.

In the technical solution, it is further considered that a plurality of obstacles may exist in the operating zone of the robot, and the arrangement relationship between the obstacles may be complex and disordered. Relying solely on the distance relationship between the two adjacent obstacles may lead to inaccurate determination. Therefore, the embodiments of the present disclosure can firstly cluster the obstacles into obstacle clusters, further acquire the second distance between two adjacent obstacle clusters, and further divide the operating zone of the robot based on the second distance. For example, the obstacle-dense zone in the operating zone of the robot can be demarcated. Based on this, when the travel path is determined, the obstacle-dense zone can be avoided as much as possible based on obstacle clustering type information, which improves the travel efficiency of the robot, thereby improving the operating efficiency of the robot and the user experience. Based on this, the scattered obstacle information can be centralized and clustered, which helps to plan the travel path for the robot, such that the robot avoids the obstacle-dense zone as much as possible.

It can be understood that, in the example where the robot is a cleaning robot or a sweeping robot, and the robot is applied to a home, a relatively large number of obstacles such as toys placed at random may be stored in the user's living zone. The embodiments of the present disclosure can determine the obstacle clustering type information based on the distance between two adjacent players, or determine the obstacle clustering type information based on the distance between obstacle clusters clustered by a plurality of toys. The travel path is further determined based on the obstacle clustering type information, such that the robot can avoid the obstacle-dense zone as much as possible, thereby improving the travel efficiency of the robot.

As shown in FIG. 2, zone A includes a plurality of obstacles, and zone B includes two obstacles. The distance between two adjacent obstacles in zone A is less than a first threshold, and the distance between two adjacent obstacles in zone B is also less than the first threshold. The distance between an obstacle in zone B and an obstacle in zone A is greater than the first threshold. Therefore, the two obstacle clusters A and B are delineated, and obstacle clustering type information can be further determined based on the distance between the two obstacle clusters.

In a feasible embodiment, the step of determining the obstacle clustering type information based on the second distance information includes: determining, in the case where a distance between two adjacent obstacle clusters is less than a second threshold, obstacle clustering type information of a zone where the two obstacle clusters are located as an obstacle-dense zone; where the value of the second threshold is greater than the first threshold.

In the technical solution, the specific step of determining the obstacle clustering type information based on the second distance information is further provided. In the case where the distance between the two adjacent obstacle clusters is less than the second threshold, it can be considered that the distance between the two obstacle clusters is very small, and it is also difficult for the robot to pass between the two obstacle clusters. Therefore, the obstacle clustering type information of the zone where the two obstacle clusters are located can be determined as the obstacle-dense zone.

In a feasible embodiment, the step of determining the travel path based on the obstacle clustering type information includes: determining, in response to a movement instruction, a first travel path based on the obstacle clustering type information; where the first travel path and the obstacle-dense zone are disposed in a staggered manner.

In the technical solution, the specific step of determining the travel path based on the obstacle clustering type information is further provided. Under certain operating conditions, the robot only needs to move to a fixed point. For example, in the case where the robot has low power and needs to return to the charging pile for charging, the robot can determine the first travel path based on the obstacle clustering type information. The first travel path travels around the obstacle-dense zone, such that the robot does not pass through the obstacle-dense zone during movement, thereby improving the travel efficiency of the robot. For example, the robot can be charged as soon as possible, and the stalling of the machine can be avoided, such that the running track of the machine is smoother and quicker, thereby improving the user experience.

It can be understood that, the movement instruction may be sent by the control device to the robot, and the movement instruction may also be automatically generated by the robot. For example, the movement instruction may be automatically generated when the robot identifies its low power.

In a feasible embodiment, the step of determining the travel path based on the obstacle clustering type information includes: determining, in response to a quick mapping instruction, a second travel path based on the obstacle clustering type information; where the second travel path firstly passes through a zone other than the obstacle-dense zone, and then passes through the obstacle-dense zone.

In the technical solution, during the use of the robot, especially when the robot is recently put into use, or the robot enters an operating space for the first time, the robot needs to move in the operating zone to construct the map of the operating zone. In this case, the quick mapping instruction may be sent to the robot, and the robot further determines the second travel path in response to the quick mapping instruction and in combination with the obstacle clustering type information. The second travel path firstly passes through a zone other than the obstacle-dense zone, and then passes through the obstacle-dense zone. That is, the robot firstly passes through the zone with a relatively small number of or relatively scattered obstacles, and then passes through the obstacle-dense zone. Based on this, the mapping efficiency can be improved, and the user can be prevented from feeling that the robot travels slowly in the obstacle-dense zone for a long time, thereby avoiding the user's impression of low travel efficiency of the robot and maintaining a positive user perception of the robot's performance. Based on this, the robot can quickly map the zone with a relatively small number of obstacles, and then enter the obstacle-dense zone for mapping, thereby improving the user experience.

In a feasible embodiment, the step of determining the travel path based on the obstacle clustering type information includes: determining, in response to a quick cleaning instruction, a third travel path based on the obstacle clustering type information; where the third travel path is located in a zone other than the obstacle-dense zone.

In the technical solution, the specific step of determining the travel path based on the obstacle clustering type information is further provided. Under certain operating conditions, the user may need the robot to complete the work as soon as possible. Taking a cleaning robot as an example, the user may want to complete the cleaning work as soon as possible. In this case, the user can send the quick cleaning instruction to the robot. In this case, considering that if the robot travels into the obstacle-dense zone, the cleaning speed of the robot will be greatly affected. Therefore, the third travel path may be planned in a zone other than the obstacle-dense zone. The cleaning robot can perform quick cleaning along the third travel path, and the cleaning robot does not need to enter the obstacle-dense zone, thereby improving the dust pickup efficiency.

In a feasible embodiment, the method for planning a path further includes: improving, in the case where a robot enters the obstacle-dense zone, control precision of the robot; where the control precision includes travel control precision and/or cleaning control precision of the robot.

In the technical solution, after the obstacle-dense zone is determined based on the first distance information between two adjacent obstacles or the second distance information between two adjacent obstacle clusters, different control modes may be used when the robot is in different zones. Specifically, in the case where the robot enters the obstacle-dense zone, there may be a relatively large number of obstacles around the robot. In this case, improving the travel control precision of the robot can use more detailed actions to get out of trouble. For example, when the robot attempts to pass through some narrow channels, it can try several times, and can slowly travel with a different small angle each time. An action similar to a wall-following action may be designed to get out of the obstacle. The cleaning control precision of the robot can also be improved to improve the cleaning efficiency in the obstacle-dense zone. However, in the case where the robot is not in the obstacle-dense zone, high-precision control is not required. This configuration can reduce the amount of data processing controlled by the robot and save energy.

In a feasible embodiment, the method for planning a path further includes: improving, in the case where the robot enters the obstacle-dense zone, identification precision of the robot; where the identification precision includes obstacle identification precision.

In the technical solution, after the obstacle-dense zone is determined based on the first distance information between two adjacent obstacles or the second distance information between two adjacent obstacle clusters, different identification modes may be used when the robot is in different zones. Specifically, in the case where the robot enters the obstacle-dense zone, there may be a relatively large number of obstacles around the robot. In this case, improving the identification precision of the robot can enable the robot to capture the information of the obstacles around the robot as soon as possible. Based on this, the travel posture of the robot can be adjusted as soon as possible, such that the robot efficiently passes through the obstacle-dense zone, or efficiently works in the obstacle-dense zone.

In a feasible embodiment, the method for planning a path further includes: being in response to a cleaning instruction; dividing a zone where a robot is located into the obstacle-dense zone and an easy-to-clean zone in the case where an area of the obstacle-dense zone is greater than a third threshold; and controlling the robot to separately clean the obstacle-dense zone and the easy-to-clean zone.

In the technical solution, when the user needs the robot to perform a whole domain cleaning operation on the operating zone of the robot, for example, in the case where the robot is a cleaning robot and the user needs whole domain cleaning, the user can send a cleaning instruction. In this case, after the obstacle-dense zone is determined, the area of the obstacle-dense zone may be further identified. In the case where the area of the obstacle-dense zone is greater than the third threshold, the obstacle-dense zone is very large. In this case, it takes a long time for the robot to clean the obstacle-dense zone. Therefore, the robot can be controlled to separately clean the obstacle-dense zone and the easy-to-clean zone. For example, the easy-to-clean zone may be cleaned firstly, and then the obstacle-dense zone may be cleaned. Based on this, in an aspect, the dust pickup efficiency can be improved; in another aspect, the robot can be prevented from frequently switching and moving between the obstacle-dense zone and the easy-to-clean zone, such that the travel mode of the robot is in a uniform state within a period of time, which is more energy-saving, reduces the amount of data processing controlled by the robot and the operation pressure of the processor of the robot, and can improve the response efficiency of the robot.

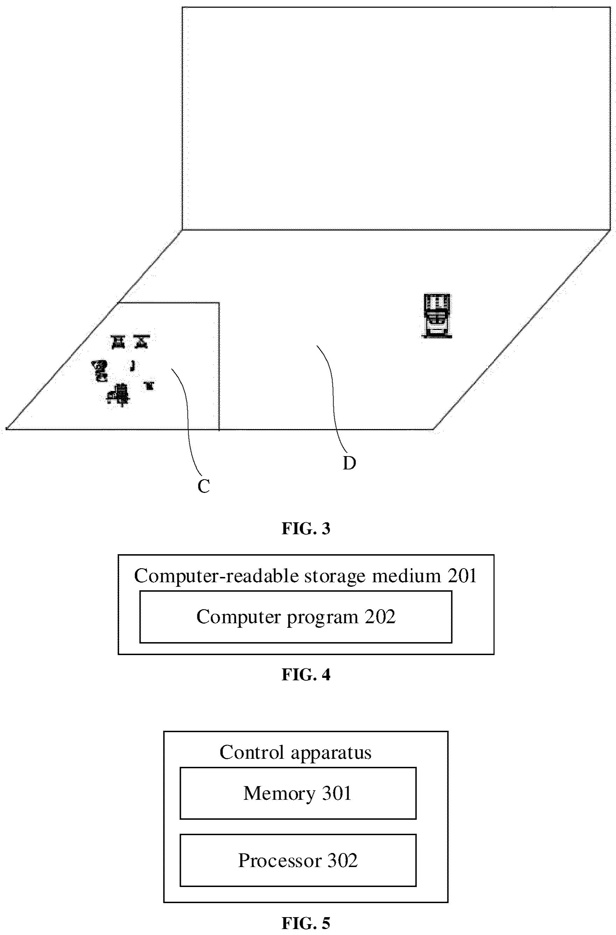

As shown in FIG. 3, in the figure, zone C has a relatively large number of obstacles, that is, zone C is an obstacle puzzle zone. Zone D has a relatively small number of obstacles, that is, zone D is an easy-to-clean zone. Based on this, a robot can be controlled to separately clean zone C and zone D. For example, zone D may be cleaned firstly, and then zone C is cleaned.

As shown in FIG. 4, a computer-readable storage medium 201 is provided according to a second aspect of the embodiments of the present disclosure. The computer-readable storage medium 201 stores a computer program 202 to implement the method for planning a path according to any one of the above technical solutions.

The computer-readable storage medium 201 according to the embodiments of the present disclosure implements the method for planning a path according to any one of the above technical solutions. Therefore, the computer-readable storage medium 201 has all the beneficial effects of the method for planning a path according to the above technical solutions.

The computer-readable storage medium 201 according to the embodiments of the present disclosure firstly acquires first distance information between two adjacent obstacles, then classifies obstacle clustering types based on the first distance information, and further determines a travel path based on obstacle clustering type information to implement the planning of the travel path. The method for planning a path according to the embodiments of the present disclosure can classify the obstacle clustering types in an operating zone of a robot based on the distance between obstacles. For example, the method can demarcate an obstacle-dense zone in the operating zone of the robot. Based on this, when the travel path is determined, the obstacle-dense zone can be avoided as much as possible based on obstacle clustering type information, which improves the travel efficiency of the robot, thereby improving the operating efficiency of the robot and the user experience.

Based on such an understanding, the technical solutions according to the present disclosure may be embodied in the form of a software product. The software product may be stored in a non-volatile storage medium (which may be a CD-ROM, a USB flash drive, a portable hard drive, or the like), and includes several instructions to enable a computer device (which may be a personal computer, a server, a network device, or the like) to perform the method according to the implementation scenarios of the present disclosure.

As shown in FIG. 5, a control apparatus is provided according to a third aspect of the embodiments of the present disclosure. The control apparatus includes: a memory 301, storing a computer program; and a processor 302, executing the computer program; where the processor 302, when executing the computer program, implements the method for planning a path according to any one of the above technical solutions.

The control apparatus according to the embodiments of the present disclosure implements the method for planning a path according to any one of the above technical solutions. Therefore, the control apparatus has all the beneficial effects of the method for planning a path according to the above technical solutions.

The control apparatus according to the embodiments of the present disclosure firstly acquires first distance information between two adjacent obstacles, then classifies obstacle clustering types based on the first distance information, and further determines a travel path based on obstacle clustering type information to implement the planning of the travel path. The method for planning a path according to the embodiments of the present disclosure can classify the obstacle clustering types in an operating zone of a robot based on the distance between obstacles. For example, the method can demarcate an obstacle-dense zone in the operating zone of the robot. Based on this, when the travel path is determined, the obstacle-dense zone can be avoided as much as possible based on obstacle clustering type information, which improves the travel efficiency of the robot, thereby improving the operating efficiency of the robot and the user experience.

In some examples, the control apparatus may further include a user interface, a network interface, a camera, a radio frequency (RF) circuit, a sensor, an audio circuit, a Wi-Fi module, and the like. The user interface may include a display, and an input unit such as a keyboard. An optional user interface may further include a USB interface, a card reader interface, and the like. The network interface may optionally include a standard wired interface, a standard wireless interface (for example, a Wi-Fi interface), and the like.

In an exemplary embodiment, the control apparatus may further include an input/output interface and a display device. The functional units may communicate with each other via a bus. The memory stores a computer program, and the processor is configured to execute the program stored in the memory to implement the method according to the above embodiments.

The above storage medium may further include an operating system, and a network communication module. The operating system is the program that manages hardware and software resources of the entity device in the above method, and supports the operation of an information processing program and other software and/or programs. The network communication module is configured to implement the communication between the assemblies inside the storage medium, and the communication with other hardware and software in the information processing entity device.

Based on the descriptions of the above embodiments, those skilled in the art can clearly understand that the present disclosure may be implemented by the mode of software in combination with a necessary general hardware platform, or may be implemented by hardware.

The present disclosure is described with reference to flowcharts and/or block diagrams of the method, the device (system), and the computer program product according to the embodiments of the present disclosure. It should be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a special-purpose computer, an embedded computer, or processors of other programmable data processing devices to generate a machine, such that an apparatus for achieving functions designated in one or more flows of the flowcharts and/or one or more blocks of the block diagrams is generated based on instructions executed by the computers or the processors of the other programmable data processing devices.

A robot is provided according to a fourth aspect of the embodiments of the present disclosure. The robot includes: an obstacle detection apparatus, configured to acquire obstacle position information; a processor, where the processor is connected to the obstacle detection apparatus to implement the method for planning a path according to any one of the above technical solutions; and a navigation unit, where the navigation unit is connected to the processor.

The robot according to the embodiments of the present disclosure implements the method for planning a path according to any one of the above technical solutions. Therefore, the robot has all the beneficial effects of the method for planning a path according to the above technical solutions, which will not be repeated herein.

The robot according to the embodiments of the present disclosure includes an obstacle detection apparatus, a processor, and a navigation unit. The obstacle detection apparatus can be configured to acquire the obstacle position information. The processor can further collect the obstacle position information, and the processor still further acquires first distance information between two adjacent obstacles. Then the processor classifies obstacle clustering types based on the first distance information, and further determines a travel path based on obstacle clustering type information to implement the planning of the travel path. After the travel path is determined, the processor can send the travel path to the navigation unit, and the navigation unit can control the robot to move based on the travel path. The robot according to the embodiments of the present disclosure can classify, based on the distance between obstacles, the obstacle clustering types in an operating zone of the robot. For example, an obstacle-dense zone can be demarcated in the operating zone of the robot. Based on this, when the travel path is determined, the obstacle-dense zone can be avoided as much as possible based on obstacle clustering type information, which improves the travel efficiency of the robot, thereby improving the operating efficiency of the robot and the user experience.

In some examples, a robot body is configured to perform a cleaning operation. The robot body includes a traveling unit and a cleaning unit. The traveling unit is configured to drive the robot body to move, and the cleaning unit is configured to clean the ground.

In some examples, the robot body may further include a base station, and the base station is configured to charge the robot body.

In the present disclosure, the terms "first", "second", and "third" are merely used for descriptive purposes, and shall not be understood as indicating or implying relative importance. The term "a plurality of" means two or more, unless explicitly defined otherwise. Terms such as "mount", "connect", "link", and "fix" should be understood in a broad sense. For example, "connect" may refer to a fixed connection, a detachable connection, or an integral connection, and "link" may refer to a direct linkage, or an indirect linkage by means of an intermediate medium. For those of ordinary skill in the art, the specific meanings of the aforementioned terms in the present disclosure can be understood according to specific conditions.

In the description of the present disclosure, it should be understood that orientations or positional relationships indicated by terms such as "upper", "lower", "left", "right", "front", and "rear" are those shown based on the accompanying drawings, and are merely intended to facilitate and simplify description of the present disclosure rather than to indicate or imply that the indicated apparatus or unit must have a specific direction and be structured and operated according to the specific orientation, and should not be construed as limiting the present disclosure.

In the description of the specification, the description of terms "one embodiment", "some embodiments", "a specific embodiment", and the like means that specific features, structures, materials, or characteristics described in connection with the embodiments or examples are included in at least one embodiment or example of the present disclosure. In the specification, the schematic description of the aforementioned terms does not necessarily refer to the same embodiment or example. Moreover, the specific features, structures, materials, or characteristics described may be combined in a suitable manner in any one or more embodiments or examples.

The above are only preferred embodiments of the present disclosure and are not intended to limit the present disclosure. For those skilled in the art, the present disclosure can be modified and varied. Any modification, equivalent substitution, improvement, and the like made within the spirit and principle of the present disclosure shall all fall within the protection scope of the present disclosure.

## Claims

1. A method for planning a path, comprising:
acquiring first distance information between two adjacent obstacles;
determining obstacle clustering type information based on the first distance information;
and
determining a travel path based on the obstacle clustering type information.

2. The method for planning a path according to claim 1, wherein a step of determining the obstacle clustering type information based on the first distance information comprises:
determining, in a case where a distance between two adjacent obstacles is less than a first threshold, obstacle clustering type information of a zone where the obstacles are located as an obstacle-dense zone.

3. The method for planning a path according to claim 1, further comprising:
clustering obstacles with an interval less than the first threshold to acquire obstacle clusters;
acquiring second distance information between two adjacent obstacle clusters; and
determining the obstacle clustering type information based on the second distance information.

4. The method for planning a path according to claim 3, wherein a step of determining the obstacle clustering type information based on the second distance information comprises:
determining, in a case where a distance between two adjacent obstacle clusters is less than a second threshold, obstacle clustering type information of a zone where the obstacle clusters are located as an obstacle-dense zone;
wherein a value of the second threshold is greater than the first threshold.

5. The method for planning a path according to any one of claims 1 to 4, wherein a step of determining the travel path based on the obstacle clustering type information comprises:
determining, in response to a movement instruction, a first travel path based on the obstacle clustering type information;
wherein the first travel path and the obstacle-dense zone are disposed in a staggered manner.

6. The method for planning a path according to any one of claims 1 to 4, wherein a step of determining the travel path based on the obstacle clustering type information comprises:
determining, in response to a quick mapping instruction, a second travel path based on the obstacle clustering type information;
wherein the second travel path firstly passes through a zone other than the obstacle-dense zone, and then passes through the obstacle-dense zone; and/or
determining, in response to a quick cleaning instruction, a third travel path based on the obstacle clustering type information;
wherein the third travel path is located in a zone other than the obstacle-dense zone.

7. The method for planning a path according to any one of claims 1 to 4, further comprising:
improving, in a case where a robot enters the obstacle-dense zone, control precision of the robot; and/or
improving, in the case where the robot enters the obstacle-dense zone, identification precision of the robot;
wherein the control precision comprises travel control precision and/or cleaning control precision of the robot, and the identification precision comprises obstacle identification precision.

8. The method for planning a path according to any one of claims 1 to 4, further comprising:
being in response to a cleaning instruction;
dividing a zone where a robot is located into the obstacle-dense zone and an easy-to-clean zone in a case where an area of the obstacle-dense zone is greater than a third threshold; and
controlling the robot to separately clean the obstacle-dense zone and the easy-to-clean zone.

9. A computer-readable storage medium, wherein
the computer-readable storage medium stores a computer program to implement the method for planning a path according to any one of claims 1 to 8.

10. A control apparatus, comprising:
a memory, storing a computer program; and
a processor, executing the computer program;
wherein the processor, when executing the computer program, implements the method for planning a path according to any one of claims 1 to 8.

11. A robot, comprising:
an obstacle detection apparatus, configured to acquire obstacle position information;
a processor, wherein the processor is connected to the obstacle detection apparatus to implement the method for planning a path according to any one of claims 1 to 8; and
a navigation unit, wherein the navigation unit is connected to the processor.
